# EUROPEAN PATENT APPLICATION

(11) **EP 4 092 961 A1**
(43) Date of publication of application: **23.11.2022**
(21) Application number: 21741956.3
(22) Date of filing: 15.01.2021
(51) Int. Cl.: H04L 12/18

(54) **GROUP UPDATING METHOD, MESSAGE SENDING METHOD, AND APPARATUSES**

(30) Priority: 17.01.2020 CN 202010054612
(71) Applicant: BOE Technology Group Co., Ltd., Beijing 100015 (CN)
(72) Inventor: ZHANG, Qian, Beijing 100176 (CN); ZHAO, Junjie, Beijing 100176 (CN); SU, Jing, Beijing 100176 (CN); ZHAO, Yanqiu, Beijing 100176 (CN)
(74) Representative: AWA Sweden AB
(86) International application number: PCT/CN2021/072130
(87) International publication number: WO 2021/143834

(57) **Abstract**

The present disclosure provides a method and an apparatus of updating a group, and a method and an apparatus of transmitting a message. The method of updating the group includes: acquiring a location group for a target area; acquiring a dynamic update time of the location group; acquiring, at each time point determined according to the dynamic update time, a target location of a target group object in the location group, and querying whether a business object not belonging to the location group exists in the target area; and updating the target group object in the location group according to the acquired target location and a query result. The present disclosure may achieve a dynamic real-time update of the group object and reduce a workload and maintenance cost of a group maintenance.

## Description

This application claims priority to Chinese patent Application No. CN202010054612.4, filed on January 17, 2020, the content of which are incorporated herein by reference in their entirety.

### TECHNICAL FIELD

The present disclosure relates to a field of a dynamic group processing technology, in particular to a method and an apparatus of updating a group, and a method and an apparatus of transmitting a message.

### BACKGROUND

Group is a combination of a type of things with the same feature, which may exist in various ways, such as design software, chat software, social networking site and so on. Each group may have a subject and relevant organization rules.

Currently, an established group is generally a static group, and a user needs to create a group according to a static member list. A group member needs to be added by the user manually. When a group is created in a certain area, the user needs to manually update the group, and the group may not be dynamically updated according to a location of the group member. A user's manual operation may cause a delay in a group update, and may further increase a workload and cost of group maintenance.

### SUMMARY

The present disclosure provides a method and an apparatus of updating a group, and a method and an apparatus of transmitting a message, so as to at least partially solve problems in a related art.

According to a first aspect, the present disclosure provides a method of updating a group, including: acquiring a location group for a target area; acquiring a dynamic update time of the location group; acquiring, at each time point determined according to the dynamic update time, a target location of a target group object in the location group, and querying whether a business object not belonging to the location group exists in the target area; and updating the target group object in the location group according to the acquired target location and a query result.

Optionally, the updating the target group object in the location group according to the acquired target location and a query result includes: removing the target group object from the location group in response to the target location being outside the target area.

Optionally, the updating the target group object in the location group according to the acquired target location and a query result includes: adding a business object not belonging to the location group into the location group in response to the business object existing in the target area.

Optionally, the acquiring a location group for a target area includes: receiving a first group resource creation request; acquiring a group attribute according to the first group resource creation request; and creating a group according to the group attribute, so as to obtain the location group for the target area.

Optionally, the acquiring a location group for a target area includes: receiving a second group resource creation request; creating an initial group according to the second group resource creation request; receiving a group update request; and updating an attribute of the initial group according to the group update request, so as to obtain the location group for the target area.

Optionally, the group attribute includes at least one of a dynamic update time, an update duration, a target area, a location-related attribute, a dynamic update attribute, or a dynamic update notification attribute.

Optionally, the method further includes: acquiring an update duration of the location group; and stopping the updating of the target group object in the location group in response to a duration from a time point of obtaining the location group to a current time point being greater than or equal to the update duration.

Optionally, the method further includes: acquiring a dynamic update notification attribute of the location group; and transmitting a message notification to at least one of the target group object and the business object in response to determining, according to the dynamic update notification attribute, to transmit the message notification to at least one of the target group object and the business object.

According to a second aspect, the present disclosure provides a method of transmitting a message, including: acquiring an event notification criterion for a subscription resource, and determining, according to the event notification criterion, a target attribute to be monitored; acquiring, in response to a change in an attribute value of the target attribute, a changed attribute value of the target attribute; constructing a difference notification message according to the changed attribute value, in response to a notification mode being a difference notification mode; and transmitting the difference notification message.

Optionally, the method further includes: before acquiring the event notification criterion for the subscription resource, receiving a subscription request transmitted by a subscriber corresponding to the subscription resource; and creating or updating an operation attribute of the subscription resource according to the subscription request.

Optionally, the operation attribute includes an event notification criterion, a notification content type and a notification mode type, and the notification mode type includes any one of a difference notification mode and a conventional notification mode.

Optionally, the method further includes: acquiring a notification content type and a notification mode type for the subscription resource; and determining, according to the notification content type and the notification mode type, whether the notification mode is a difference notification mode.

Optionally, the determining, according to the notification content type and the notification mode type, whether the notification mode is a difference notification mode includes: verifying the notification content type; determining that the notification mode is the difference notification mode, in response to the notification content type being a difference notification content; verifying the notification mode type in response to the notification content type being a non-difference notification content; and determining that the notification mode is the difference notification mode, in response to the notification mode type being the difference notification mode.

Optionally, the determining, according to the notification content type and the notification mode type, whether the notification mode is a difference notification mode further includes: constructing a conventional notification message according to the changed attribute value, in response to the notification mode type being a conventional notification mode.

Optionally, the constructing a difference notification message according to the changed attribute value includes: containing an incremental identification parameter representing an incremental attribute value in the difference notification message, in response to the changed attribute value only including the incremental attribute value; containing a decrement identification parameter representing a decrement attribute value in the difference notification message, in response to the changed attribute value only including the decrement attribute value; or containing the incremental identification parameter representing the incremental attribute value and the decrement identification parameter representing the decrement attribute value in the difference notification message, in response to the changed attribute value including the incremental attribute value and the decrement attribute value.

Optionally, the difference notification message contains an incremental attribute value, a decrement attribute value, an incremental identification parameter representing the incremental attribute value, and a decrement attribute parameter representing the decrement attribute value.

According to a third aspect, the present disclosure provides an apparatus of updating a group, including: a location group acquisition module configured to acquire a location group for a target area; a dynamic update time acquisition module configured to acquire a dynamic update time of the location group; a location object acquisition module configured to acquire, at each time point determined according to the dynamic update time, a target location of a target group object in the location group, and query whether a business object not belonging to the location group exists in the target area; and a group object update module configured to update the target group object in the location group according to the acquired target location and a query result.

According to a fourth aspect, the present disclosure provides an apparatus of transmitting a message, including: a target attribute determination module configured to acquire an event notification criterion for a subscription resource, and determine, according to the event notification criterion, a target attribute to be monitored; an attribute value acquisition module configured to acquire, in response to a change in an attribute value of the target attribute, a changed attribute value of the target attribute; a difference notification message construction module configured to construct a difference notification message according to the changed attribute value, in response to a notification mode being a difference notification mode; and a difference notification message transmitting module configured to transmit the difference notification message.

According to a fifth aspect, the present disclosure provides an electronic device, including: s memory storing a computer program; and a processor configured to execute the computer program to implement the above-mentioned method of updating the group or the above-mentioned method of transmitting the message.

According to a sixth aspect, the present disclosure provides a computer-readable storage medium storing computer instructions that, when executed by a processor of an electronic device, allow the electronic device to perform the above-mentioned method of updating the group or the above-mentioned method of transmitting the message.

Compared with the related art, the present disclosure has the following advantages.

In the embodiments of the present disclosure, by acquiring the target location of the target group object in the location group, querying whether a business object not belonging to the location group exists in the target area, and updating the target group object in the location group according to the acquired target location and a query result, a dynamic real-time update of the group may be achieved according to the location of the object in the target area, a problem of group update delay may be avoided, and a workload and maintenance cost of a group maintenance may be reduced.

### BRIEF DESCRIPTION OF THE DRAWINGS

FIG. 1 shows a step flowchart of a method of updating a group provided in a first embodiment of the present disclosure.
FIG. 2 shows a schematic diagram of creating a location group provided by an embodiment of the present disclosure.
FIG. 3 shows a schematic diagram of a group creation, update and notification provided by an embodiment of the present disclosure.
FIG. 4 shows a step flowchart of a method of transmitting a message provided by a second embodiment of the present disclosure.
FIG. 5 shows a schematic diagram of a difference notification message provided by an embodiment of the present disclosure.
FIG. 6 shows a schematic structural diagram of an apparatus of updating a group provided by a third embodiment of the present disclosure.
FIG. 7 shows a schematic structural diagram of an apparatus of transmitting a message according to a fourth embodiment of the present disclosure.

### DETAILED DESCRIPTION OF EMBODIMENTS

In order to make the above objectives, features and advantages of the present disclosure more clearly understood, the present disclosure will be described in further detail below with reference to the accompanying drawings and specific embodiments.

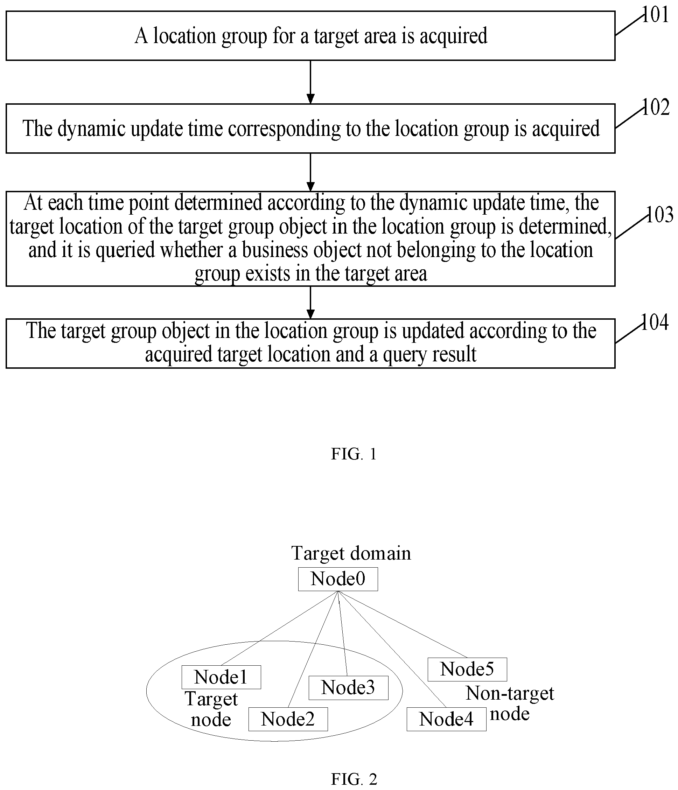

Referring to FIG. 1, a step flowchart of a method of updating a group provided by a first embodiment of the present disclosure is shown. The method of updating the group may specifically include the following steps.

In step 101, a location group for a target area is acquired.

In the embodiments of the present disclosure, the target area refers to an area the location group within which needs to be dynamically updated, such as "xx district in xx city", or "xx road in xx district in xx city", etc. Specifically, the target area may be determined according to a service requirement, which is not limited in the embodiments of the present disclosure.

The location group refers to a pre-acquired group for the target area, which needs to be dynamically updated. The location group contains an object located in the target area. According to the embodiments, the location group may be created according to a received group resource creation request. When creating the location group, an object to be added may be acquired from the target area and then added to the location group, so that the location group related to a location may be obtained. According to the embodiments, the location group may also be obtained by updating a pre-created initial group.

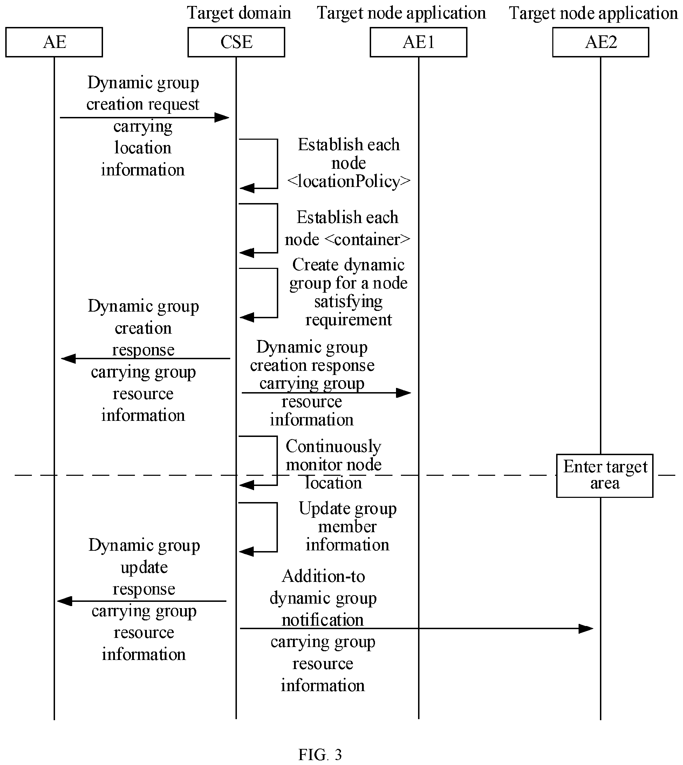

FIG. 2 shows a schematic diagram of creating a location group provided by an embodiment of the present disclosure, and FIG. 3 shows a schematic diagram of a group creation, update and notification provided by an embodiment of the present disclosure. A process of creating a location group will be described in detail with reference to FIG. 2, FIG. 3 and the following specific implementations.

In a specific implementation of the present disclosure, the above step 101 may include the following sub-steps.

In sub-step A1.1, a group resource creation request (a first group resource creation request) is received.

The group resource creation request refers to a request for creating a group. As shown in FIG. 3, the group resource creation request may be transmitted by an application entity AE to a common service entity CSE.

The group resource creation request may not contain a location function description information of the target area, that is, the group resource creation request may be used to create a location-independent group. Alternatively, the group resource creation request may also be used to create a group related to a location different from the target area.

The group resource creation request may also contain the location function description information of the target area. As shown in FIG. 3, the AE may carry the location function description information (i.e., the target area) in the group resource creation request. When creating a location-related location group for the target area, the group resource creation request carrying the location function description information may be transmitted to the CSE. The generated group resource creation request may further contain an attribute of locationRelated, a value of which indicates whether the group resource is location-related. When the attribute value is TRUE, it means that the group to be created is location-related. When the attribute value is FALSE, it means that the group to be created is not location-related. If the attribute value is not provided in the group resource creation request, the group to be created defaults to be not location-related. If the group to be created is a location-related group, the group resource creation request is required to contain the location function description information (i.e., the target area), that is, locationTargetArea, which represents an area information of the target area. An attribute value of locationTargetArea is a required attribute value when the attribute value of locationRelated is TRUE.

After the group resource creation request is received, sub-step A1.2 is performed.

In sub-step A1.2, a group attribute is acquired according to the group resource creation request.

According to the embodiments, the group attribute includes at least one of a dynamic update time (locationUpdatePeriod), an update duration (dynamicUpdateDuration), a target area (locationTargetArea), a location-related attribute (locationRelated), a dynamic update attribute (dynamicUpdate), or a dynamic update notification attribute (dynamicUpdateNotification).

After the group attribute is acquired, sub-step A1.3 is performed.

In sub-step A1.3, a group is created according to the group attribute, so as to obtain a location group for the target area. Specifically, an object to be added may be acquired, and the object to be added is an object located within the target area determined by the attribute of locationTargetArea. The object is added to the created location group, and the values of the various attributes specified in the group resource creation request are added for the location group. For example, as shown in FIG. 2, nodes Node1 to Node5 belong to the same target domain, such as a domain managed by a node Node0. The group thus created may be adapted to an intra-domain scenario. A plurality of group objects may be acquired from the target area. A node that meets a requirement may be determined as a group object from the nodes. Still as shown in FIG. 2, the nodes Node1, Node2 and Node3 belong to the same target area and may be added to the same location group for the target area. Node4 and Node5 do not belong to the above-mentioned target area and may not be added to the group when creating the location group.

In another implementation, the above step 101 may include the following sub-steps.

In sub-step A2.1, a group resource creation request (a second group resource creation request) is received.

The second group resource creation request does not contain the group attribute, that is, does not contain any one of the dynamic update time (locationUpdatePeriod), the update duration (dynamicUpdateDuration), the target area (locationTargetArea), the location-related attribute (locationRelated), the dynamic update attribute (dynamicUpdate) or the dynamic update notification attribute (dynamicUpdateNotification). An initial group may be created according to the second group resource creation request.

In sub-step A2.2, the initial group is created according to the second group resource creation request.

The initial group may be a common group, that is, the initial group may be a location-independent group. A group object may be added to the created initial group, that is, the created initial group contains a group member. The group object in the initial group may have an object attribute different from the aforementioned group attribute. The created initial group may also be an empty group, that is, no group object is added to the initial group. In addition, the initial group may also be a pre-existing group, that is, a group created at a previous time, which is not limited in the present disclosure.

In sub-step A2.3, a group update request is received.

The group update request may be transmitted by the AE to the CSE. The group update request may contain a group attribute to be updated, for example, at least one of the dynamic update time (locationUpdatePeriod), the update duration (dynamicUpdateDuration), the target area (locationTargetArea), the location-related attribute (locationRelated), the dynamic update attribute (dynamicUpdate), or the dynamic update notification attribute (dynamicUpdateNotification).

In sub-step A2.4, the attribute of the initial group is updated according to the group update request, so as to obtain a location group for the target area.

In this embodiment, updating the attribute value of the initial group attribute may include the following two aspects.

### 1. Update of an original attribute value

For example, if the original attribute value of the attribute dynamicUpdateNotification is false, the original attribute value false of the attribute dynamicUpdate-Notification may be updated to true by the update of the original attribute value.

### 2. Update of an attribute value of a non-existing attribute

For example, if the created initial group does not contain the attribute dynamicUpdate, then when updating the initial group, the attribute value (which is empty) of the undefined attribute dynamicUpdate may be updated to the attribute value true.

After the location group is created or updated and the group object is determined, a response may be made to the group resource creation request. As shown in FIG. 3, a dynamic group establishment response carrying a group resource information is returned to the AE transmitting the group resource creation request and a target node application (e.g., AE1) contained in the location group.

Specific meanings of the dynamic update time (locationUpdatePeriod), the update duration (dynamicUpdateDuration), the target area (locationTargetArea), the location-related attribute (locationRelated), the dynamic update attribute (dynamicUpdate) and the dynamic update notification attribute (dynamicUpdateNotification) of the group attribute are shown in Table 1.

**Table 1**

| Attributes of <group> | Multi- plicity | RW/RO/WO | Description | < groupAnnc> Attributes |
|---|---|---|---|---|
| locationUpdatePeriod | 0..1 | WO | A value of this attribute indicates a location information update interval | OA |
| locationRelated | 0..1 | RW | A value of this attribute indicates whether the group resource is locationrelated | OA |
| | | | --TRUE: the group is location -related | |
| | | | -FALSE: the group is not location -related | |
| | | | If the value of this attribute is not provided, the group defaults to be not locationrelated | |
| locationTargetArea | 0..1 | RW | A value of this attribute represents a regional information of the corresponding target area | OA |
| | | | The value of this attribute is required when the attribute value of locationRelated is TRUE | |
| dynamicUpdate | 0..1 | RW | A value of this attribute indicates whether the group resource needs to be dynamically updated on the Hosting CSE | OA |
| | | | --TRUE: a continuous dynamic update is required after the group is established | |
| | | | --FALSE: no continuous dynamic update is required after the group is established | |
| dynamicUpdateDuration | 0..1 | RW | A value of this attribute indicates a duration of the dynamic update of the group resource on the Hosting CSE. | OA |
| | | | The value of this attribute is valid only when the value of dynamic Update is TRUE | |
| dynamicUpdateNotification | 0..1 | RW | Whether a changed member receives a corresponding notification after the group member changes dynamically | OA |
| | | | --TRUE: a newly added member or a newly departed member receives a corresponding notification | |
| | | | --FALSE: a newly added member or a newly departed member does not receive a corresponding notification | |

In the present disclosure, by updating at least one of the above-mentioned six group attributes, the initial group may be updated to a location-related location group for the target area.

According to the embodiments, a time of stopping a dynamic update operation on the location group may be determined according to the update duration of the location group, which will be described in detail with reference to the following specific implementations.

In a specific implementation of the present disclosure, the method of updating the group may further include the following steps.

In step B1, the update duration corresponding to the location group is acquired.

In the embodiments of the present disclosure, the update duration refers to a duration of dynamically updating the location group after the location group is obtained, that is, after the location group is successfully created. For example, the dynamicUpdateDuration attribute value set for the location group represents the duration of the dynamic update of the group resource on the target area. This attribute value is valid only when dynamicUpdate is TRUE.

During the creation of the location group, the duration of the dynamic update of the location group may be set to, for example, 3 days, 8 days, etc. Specifically, a value of the update duration may be determined according to the service requirement, which is not limited in the embodiments of the present disclosure.

According to the embodiments, the update duration may also be an update duration that is set when the initial group is updated to the location group, or may be the update duration set when the initial group is created. Specifically, the update duration may be determined according to the service requirement, which is not limited in the embodiments of the present disclosure.

After the initial group is updated to a location group, the update duration corresponding to the location group may be acquired.

After the update duration corresponding to the location group is acquired, step B2 is performed.

In step B2, in response to the duration from a time point of obtaining the location group to a current time point being greater than or equal to the update duration, the dynamic update operation on the target group object in the location group is stopped.

When the duration from the time point of creating the location group to the current time point is less than the update duration, the update operation on the group object in the location group continues to be performed. According to an embodiment, the update operation includes an operation of adding or removing the group object according to the location.

When the duration from the time of obtaining the location group to the current time point is greater than or equal to the update duration, the dynamic update operation on the group object in the location group is stopped, that is, a dynamically updated group is converted into a normal group. If a group object is required to be removed from or added to the group later, a group administrator needs to operate manually. For example, the update duration may be dynamicUpdateDuration, and the Hosting CSE may determine, according to the dynamicUpdateDuration attribute value, whether to perform an operation of updating a dynamic group member. Specifically, if an interval between the current time and the group creation time is less than the dynamicUpdateDuration attribute value, the update is performed; if the interval between the current time and the group creation time is greater than the dynamicUpdateDuration attribute value, the update is not performed.

It may be understood that the above examples are only examples listed for better understanding of the technical solutions of the embodiments of the present disclosure, and are not intended to be the only limitation on the embodiments of the present disclosure.

In the embodiments of the present disclosure, a resource consumed by continuously acquiring the location of the group object and/or continuously acquiring the business object in the target area that may be added to the location group may be reduced by the setting of the update duration.

Next, in step 102, the dynamic update time corresponding to the location group is acquired.

The dynamic update time refers to a time of dynamically updating the location group.

In some examples, one or more time points, such as 12:00, 12:30, 13:00, 13:30, etc., may be determined according to the dynamic update time.

In some examples, the dynamic update time may include a plurality of time points at a set time interval after the location group is obtained. For example, an addition of target group objects to the location group starts from 12:00, and a location acquisition of target group objects is performed every 20 minutes, that is, at 12:20, 12:40, 13:00, etc.

It may be understood that the above examples are only examples listed for better understanding of the technical solutions of the embodiments of the present disclosure, and are not intended to be the only limitation on the embodiments of the present disclosure.

According to the embodiments, the dynamic update time may be an update time that is set when the initial group is updated to the location group, or may be an initial dynamic update time that is set when the initial group is created. Specifically, the dynamic update time may be determined according to the service requirement, which is not limited in the embodiments of the present disclosure.

In the embodiments of the present disclosure, a group update attribute of the location group may be further set, which will be described in detail with reference to the following specific implementations.

In a specific implementation of the present disclosure, the above step 102 may include the following sub-steps.

In sub-step C1, the dynamical update attribute of the location group is acquired.

In the embodiments of the present disclosure, the dynamic update attribute of the group refers to, for example, dynamicUpdate.

After the dynamic update time is acquired, the dynamic update attribute of the location group may be acquired, and then sub-step C2 is performed.

In sub-step C2, the dynamic update time is acquired when the dynamic update attribute is TRUE.

After the dynamic update attribute of the location group is acquired, whether the group resource needs to be dynamically updated may be determined according to the dynamic update attribute. For example, the dynamic update time is acquired when dynamicUpdate=TRUE, while no subsequent operation is performed when dynamicUpdate=FALSE.

Next, in step 103, at each time point determined according to the dynamic update time, the target location of the target group object in the location group is determined, and it is queried whether a business object not belonging to the location group exists in the target area.

The target group object refers to an object that has been added to the locationrelated location group. The location of the target group object may be changed. The target group object may be any of a user, a movable entity or other objects, which may be determined according to the service requirement.

The target location refers to a location of the target group object at the location acquisition time point.

The business object refers to a location-related object located in the target area but not yet added to the location group. The business object is an object of the same type as the group object added to the location group.

At the location acquisition time point, the target location of the target group object in the location group may be acquired, and it is queried whether a location-related business object not belonging to the location group exists in the target area.

In some examples, the target location may be acquired by means of satellite positioning. For example, a navigation device such as GPS (Global Positioning System) carried by the target group object is in an ON state, and then a real-time positioning of a mobile terminal may be performed to acquire the target location of the target group object at the location acquisition time point.

In some examples, the target location may be a location transmitted to the CSE by the target group object. For example, a message may be transmitted to the target group object at a time before the location acquisition time point, so that a location is shared between the target group objects in the group. After receiving a reminder message, the target group object may share the location with the CSE as the target location.

Certainly, the present disclosure is not limited to this. In a specific implementation, those skilled in the art may also acquire the target location of the target group object at the location acquisition time point by using other methods. Specifically, the method of acquiring the target location may be determined according to the service requirement, which is not limited in the embodiments of the present disclosure.

The method of querying the business object may include monitoring the target area in real time to monitor whether a business object exists in the target area. The embodiments of the present disclosure are not limited to this. In a specific implementation, other methods may also be used to query whether a business object exists in the target area, which may be determined according to the business requirement and is not limited in the embodiments of the present disclosure.

Next, in step 104, the target group object in the location group is updated according to the acquired target location and a query result. According to the embodiments, whether the target group object needs to be removed from the location group may be determined according to the acquired target location. According to the embodiments, whether a new target group object needs to be added to the location group may be determined according to the query result.

In a specific implementation of the present disclosure, step 104 may further include at least one of step 104.1 and step 104.2.

In step 104.1, if the target location is outside the target area, the target group object is removed from the location group.

In step 104.2, if a business object not belonging to the location group exists in the target area, the business object is added to the location group.

According to the embodiments, after the target location of the target group object is acquired, it may be determined whether the target location is within the target area. If the target location is within the target area, no processing is performed on the target group object.

According to the embodiments, when it is determined that the target group object is outside the target area, the target group object may be removed from the location group. When a business object not belonging to the location group exists in the target area, the business object may be added to the location group. Specifically, the above may be divided into four cases. In a first case, if the target location is outside the target area and a business object exists in the target area, the target group object may be removed from the location group, and the business object may be added to the location group. In a second case, if the target location is within the target area and a business object exists in the target area, no processing is performed on the target group object, and the business object may be added to the location group. In a third case, if the target location is outside the target area and no business object exists in the target area, the target group object may be removed from the location group, and no processing is performed on the business object. In a fourth case, if the target location is within the target area and no business object exists in the target area, no processing is performed on the target group object, and no processing is performed on the business object.

The embodiments of the present disclosure may be implemented to achieve the dynamic update of the group member, so that the workload of the group administrator to manually add or remove the group member may be reduced.

After a removal of the target group object from the location group and/or an addition of the business object to the location group, whether to transmit a notification message to the target group object and/or the business object may be determined according to a change notification attribute corresponding to the location group, which is specifically described in detail with reference to the following specific implementation.

In a specific implementation of the present disclosure, the method may further include the following steps.

In step D1, a preset first change notification attribute (e.g., set by the AE) corresponding to the location group is acquired.

In the embodiments of the present disclosure, the change notification attribute, such as dynamicUpdateNotification, is preset for the location group, and whether to transmit a corresponding notification to the changed member may be determined according to the dynamicUpdateNotification.

The first change notification attribute refers to transmitting a corresponding notification to the changed group object. For example, a notification is transmitted if dynamicUpdateNotification=TRUE.

After a removal of the target group object from the location group and/or an addition of the business object to the location group, the preset first change notification attribute corresponding to the location group may be acquired.

In step D2, when it is determined according to the first change notification attribute that a message notification needs to be transmitted, a first notification message for the target object is generated, and/or a second notification message for the business object is generated.

In step D3, the first notification message is transmitted to the target group object; and/or the second notification message is transmitted to the business object.

The first notification message refers to a notification message generated after the removal of the target group object from the location group, which is generated for transmitting to the target group object. The first notification message may be used to notify of the removal of the target group object from the location group..

The second notification message refers to a notification message generated after the addition of the business object to the location group, which is generated for transmitting to the business object. The second notification message may be used to notify of the addition of the business object to the location group.

When it is determined according to the first change notification attribute that a message notification needs to be transmitted, the first notification message for the target object may be generated, and/or the second notification message for the business object may be generated. For example, when A enters the target area, the Hosting CSE contains A in a memberIDs attribute value, and if dynamicUpdateNotification=TRUE, notification is transmitted to A, and the notification contains a group information; when C leaves the target area, the Hosting CSE removes C from the memberIDs attribute value, and if dynamicUpdateNotification=TRUE, a notification is transmitted to C, and the notification contains the group information.

In another specific implementation of the present disclosure, the method may further include the following steps.

In step E1, a preset second change notification attribute corresponding to the location group is acquired.

In step E2, when it is determined according to the second change notification attribute that a message notification does not need to be transmitted, the transmitting of the notification message to the target object and/or the business object is cancelled.

In the embodiments of the present disclosure, the second change notification attribute refers to an attribute of not transmitting a notification message to the changed group member, for example, if dynamicUpdateNotification=FALSE, no notification is transmitted.

When it is determined according to the second change notification attribute that the message notification does not need to be transmitted, the transmitting of the notification message to the target group object and/or the business object is cancelled. For example, when B leaves the target area, the Hosting CSE removes B from the memberIDs attribute value, and if dynamicUpdateNotification=FALSE, no notification is transmitted to B. When D enters the target area, the Hosting CSE contains D into the memberIDs attribute value, if dynamicUpdateNotification=FALSE, no notification is transmitted to D.

It is easy to understand that whether to transmit a notification response to the AE that created the group may also be determined according to the first change notification attribute and the second change notification attribute. As shown in FIG. 3, after a target node application AE2 enters the target area and is added to the location group, the CSE transmits an update dynamic group response carrying a group resource information to the AE, so as to notify the AE of the update information on the target group object in the location group.

In the method of updating the group provided by the embodiments of the present disclosure, by acquiring the target location of the target group object in the location group, querying whether a business object not belonging to the location group exists in the target area, and updating the target group object in the location group according to the acquired target location and the query result, a dynamic real-time update of the group may be achieved according to the location of the object in the target area, the problem of a group update delay may be avoided, and a workload and maintenance cost of a group maintenance may be reduced.

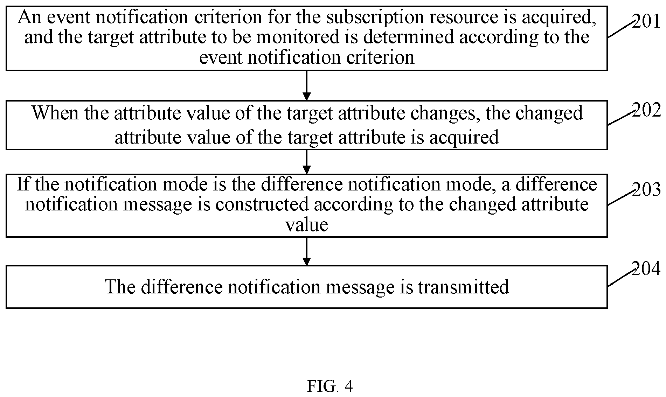

Referring to FIG. 4, a step flowchart of a method of transmitting a message provided in a second embodiment of the present disclosure is shown, which may specifically include the following steps.

In step 201, an event notification criterion for the subscription resource is acquired, and the target attribute to be monitored is determined according to the event notification criterion.

In the embodiments of the present disclosure, the subscription resource may be a resource pre-subscribed by a subscriber.

The target attribute refers to an attribute subscribed by the subscriber in the subscription resource, which needs to be monitored and may trigger a birth of a matching event.

For example, in the example shown in FIG. 3, an attribute information about the application entities AE1 and AE2 is stored in the CSE. The application entity AE, as a subscriber, may subscribe to, from the CSE, at least a part of the attribute information about the application entities AE1 and AE2, that is, the subscription resource. Further, the AE may specify the attribute in the subscription resource that needs to be monitored and that may trigger the birth of the matching event, that is, the target attribute. When the CSE transmits a notification message to at least one of AE1, AE2 and AE, the following method of transmitting the message may be adopted.

During the creation of the target attribute, an event notification criterion, namely eventNotificationCriteria, may be preset for each attribute. The event notification criterion indicates a criterion for whether to monitor the attribute.

In the present disclosure, when determining whether the attribute in the subscription resource needs to be monitored, a verification may be performed on each attribute (eventNotificationCriteria/attribute) in the subscription resource, so as to acquire a value of the event notification criterion corresponding to each attribute.

It may be understood that if eventNotificationCriteria is not set for an attribute, it may be considered that the attribute is processed according to a default strategy. For example, the attribute is not monitored, and a change in the value of the attribute may not trigger the birth of a matching event. This situation is not considered in the present application.

A setting of an operation attribute corresponding to the target attribute may be performed after receiving the subscription request transmitted by the subscriber. Specifically, after receiving the subscription request for the target attribute transmitted by the subscriber, an event notification criterion (i.e., eventNotificationCriteria), a notification content type (i.e., notificationContentType) and a notification mode type corresponding to the target attribute may be created or updated according to the subscription request. The notification mode type may include any one of a difference notification (diffNotification) and a conventional notification.

The above creation or update includes the following two cases.
1. For the creation, when the target attribute does not define at least one of the operation attributes eventNotificationCriteria, notificationContentType and diffNotification, the operation attribute not defined by the target attribute may be created for the target attribute. For example, when the target attribute does not define the operation attribute diffNotification, an attribute definition of diffNotification may be determined according to the subscription request after the subscription request is received from the subscriber, and then the diffNotification of the target attribute may be created.
2. For the update, when the target attribute defines any one of the operation attributes eventNotificationCriteria, notificationContentType and diffNotification, if at least one of them needs to be updated, the corresponding operation attribute may be updated according to the subscription request of the subscriber. For example, when the target attribute defines the operation attribute notificationContentType, after receiving the subscription request from the subscriber, it may be determined according to the subscription request that the notificationContentType needs to be updated, and then the notificationContentType of the target attribute may be updated.

After the value of the event notification criterion of each attribute is acquired, the target attribute to be monitored may be determined according to the value of the event notification criterion of each attribute. For example, if eventNotificationCriteria/attribute is set, the attribute specified by attribute may be monitored, and a verification is performed according to the value of the attribute specified by attribute. If the verification is successful, it is called the birth of a matching event. If eventNotificationCriteria/attribute is not set, the change of the attribute value of any target attribute may trigger the birth of matching event.

Next, in step 202, when the attribute value of the target attribute changes, the changed attribute value of the target attribute is acquired.

According to the embodiments, the changed attribute value of the target attribute may be only an attribute value added to the target attribute, or may be only an attribute value reduced from the target attribute, or may be an attribute value added to and reduced from the target attribute, which may be determined according to the actual situation and is not limited in the embodiments of the present disclosure.

When the attribute value of the target attribute changes, the changed attribute value of the target attribute may be acquired. For example, if an attribute value A and an attribute value B are added to the target attribute, the attribute value A and the attribute value B are used as the changed attribute values; if the attribute value A and an attribute value C are reduced from the target attribute, the attribute value A and the attribute value C are used as the changed attribute values; if the attribute value A is added to the target attribute and the attribute value D is reduced from the target attribute, the attribute value A and the attribute value D are used as the changed attribute values.

It may be understood that the above examples are only examples listed for better understanding of the technical solutions of the embodiments of the present disclosure, and are not intended to be the only limitation on the embodiments of the present disclosure.

Next, in step 203, if the notification mode is the difference notification mode, a difference notification message is constructed according to the changed attribute value.

The notification mode indicates a mode in which the notification message is transmitted. The notification mode may be determined according to the definition of the operation attribute in the subscription request transmitted by the subscriber.

The notification mode may include a difference notification mode and a conventional notification mode. The present disclosure is intended to describe the difference notification mode, and the conventional notification mode is not described in detail.

After the target attribute is acquired, the notification mode corresponding to the target attribute may be verified and acquired, which may be described in detail with reference to the following specific implementations.

In a specific implementation of the present disclosure, the above step 203 may include the following sub-steps.

In sub-step F1, the notification content type and the notification mode type of the subscription resource are acquired.

In sub-step F2, whether the notification mode corresponding to the target attribute is the difference notification mode is determined according to the notification content type and the notification mode type.

In a specific implementation of the present disclosure, the above step F2 may further include the following sub-steps.

In sub-step F2.1, the notification content type is verified.

In sub-step F2.2, in a case that the notification content type is the difference notification content, it is determined that the notification mode is the difference notification mode.

In sub-step F2.3, in a case that the notification content type is a non-difference notification content, the notification mode type is verified.

In sub-step F2.4, in a case that the notification mode type is the difference notification mode, it is determined that the notification mode is the difference notification mode.

In the embodiments of the present disclosure, the notification content type refers to a type of the content for which the notification message is generated, that is, notificationContentType.

In the present disclosure, notificationContentType may include five types, namely, 'Modified Attributes', 'All Attributes', 'ResourceID', 'Trigger Payload', and 'Modified Difference'. Different types may constitute different notification contents. Specifically, 'Modified Attributes' corresponds to broadcasting only a changed attribute value information; 'All Attributes' corresponds to broadcasting all attribute value information of the resource; 'ResourceID' corresponds to broadcasting only the resource ID involved; 'Trigger Payload' corresponds to broadcasting a trigger payload information; and 'Modified Difference' corresponds to broadcasting only a change information of the changed attribute value.

It may be understood that a core point of the present disclosure is 'Modified Difference', and the other four types will not be described in the embodiments of the present disclosure.

The notification mode type refers to an attribute indicating the type of the notification message transmitted to the subscriber when the attribute value of the target attributes changes.

Whether to transmit a difference notification may be verified using the following two methods. A first method is to verify the notification content type corresponding to the target attribute, that is, verify whether the notification type attribute of notificationContentType is 'Modified Difference', and if so, a difference notification is transmitted. A second method is to verify the notification mode type (including the difference notification mode and the conventional notification mode) corresponding to the target attribute, that is, when the notification mode type is the difference notification mode (diffNotification), the difference notification is transmitted; and when the notification mode type is the conventional notification mode, a conventional notification message for the changed attribute value may be constructed to transmit a conventional notification.

Firstly, the notification content type of the target attribute may be verified, and when the notification content type is the difference notification type, the difference notification is transmitted.

Secondly, when the notification content type of the target attribute is a non-difference notification content, the notification mode type of the target attribute is verified, and when the notification mode type is the difference notification mode, the difference notification is transmitted.

According to the embodiments, the difference notification mode refers to a mode in which a difference notification message is generated and transmitted to the subscriber.

In the following two cases, it is determined that the notification mode is the difference notification mode. In a first case, if it is verified that the notification content type (that is, notificationContentType) of the target attribute is 'Modified Difference', a difference notification is performed. In a second case, if it is verified that the notification content type (that is, notificationContentType) of the target attribute is a non-difference notification content other than 'Modified Difference', and that the notification mode type Notification of the target attribute is TRUE (that is, the difference notification mode), the difference notification is performed.

When the notification mode is the difference notification mode, a corresponding difference notification message may be constructed according to the changed attribute value.

An incremental attribute value, a decrement attribute value, an incremental identification parameter representing the incremental attribute value, and a decrement identification parameter representing the decrement attribute value may be contained in the difference notification message.

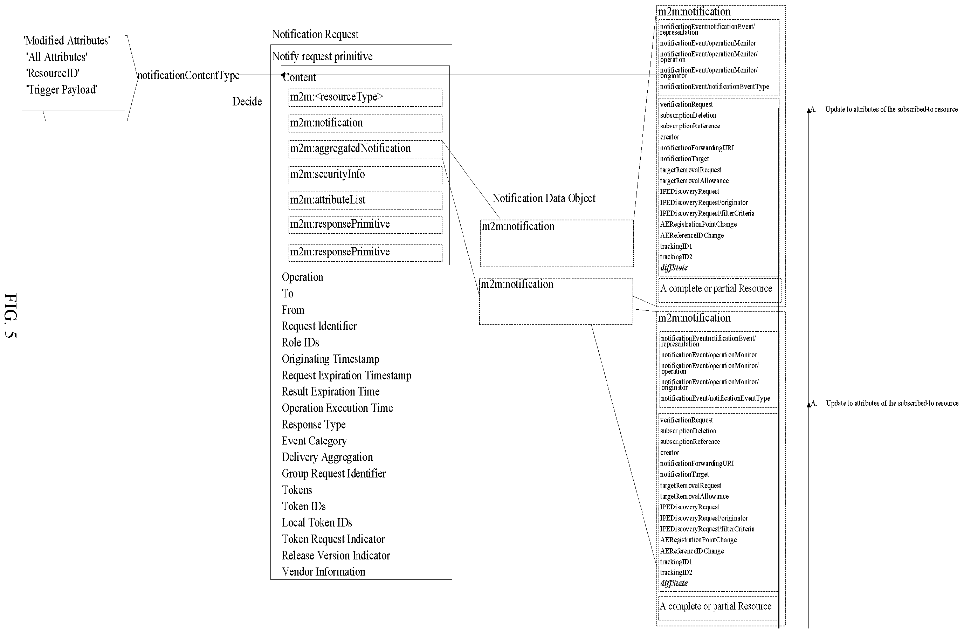

In the embodiments of the present disclosure, the difference notification message may be described in detail as follows with reference to FIG. 5.

As shown in FIG. 5, the type of the notification message to be generated may be determined according to the notificationContentType. When the notificationContentType is the difference notification type (that is, Modified Difference, which is not shown), a difference notification message, that is, m2m: notification, may be constructed. The generated notification message may contain an identification parameter of the attribute value, that is, the notification message contains "diffState", which may be specifically divided into an incremental identification parameter, a decrement identification parameter, and the like. After the difference notification message is generated, the difference notification message may be transmitted to the subscriber, and then the subscriber may update the attribute of the subscription resource according to the difference notification message, as shown in 'Update to attributes of the subscribed-to resource" shown in FIG. 5.

The changed attribute value may contain at least one of an incremental attribute value and a decrement attribute value. Then, a corresponding difference notification message may be constructed according to the specific incremental attribute value and decrement attribute value, which may be described in detail with reference to the following specific implementations.

In a specific implementation of the present disclosure, when the changed attribute value only includes an incremental attribute value, a difference notification message corresponding to an addition of the incremental attribute value is constructed, and the difference notification message contains the incremental identification parameter representing the incremental attribute value.

In the embodiments of the present disclosure, when the changed attribute value only includes the incremental attribute value, a difference notification message corresponding to the addition of the incremental attribute value may be constructed, and the difference notification message contains the incremental identification parameter representing the incremental attribute value, for example, diffState=ADDITIONS, in which the incremental attribute value information that transmits the change is required, such as incremental attribute value information DE of attribute value A.

In a specific implementation of the present disclosure, when the changed attribute value only includes the decrement attribute value, a difference notification message corresponding to a decrease of the decrement attribute value is constructed, and the difference notification message contains the decrement identification parameter representing the decrement attribute value.

When the changed attribute value only contains the decrement attribute value, a difference notification message corresponding to the decrease of the decrement attribute value may be constructed, and the difference notification message contains the decrement identification parameter representing the decrement attribute value, for example , diffState=DECREASES, where the changed decrement attribute value information, such as a decrement attribute value information AB of the attribute value A, needs to be transmitted.

In a specific implementation of the present disclosure, when the changed attribute value includes both the incremental attribute value and the decrement attribute value, a difference notification message corresponding to the addition of the incremental attribute value and the decrease of the decrement attribute value is constructed. The difference notification message contains the incremental identification parameter representing the incremental attribute value and the decrement identification parameter representing the decrement attribute value.

When the changed attribute value contains both the incremental attribute value and the decrement attribute value, a difference notification message corresponding to the addition of the incremental attribute value and the decrease of the decrement attribute value may be constructed, and the difference notification message contains the incremental identification parameter representing the incremental attribute value and the decrement identification parameter representing the decrement attribute value, such as group members increased by F and decreased by C, etc.

Next, in step 204, the difference notification message is transmitted.

According to the embodiments, the difference notification message may be transmitted to the subscriber corresponding to the target subscription resource. The subscriber refers to a business party that subscribes to the attribute value change notification message for the target attribute. The subscriber may be a user or a business platform, which may be specifically determined according to the service requirement.

In addition, it should be noted that the subscriber here is a subscriber in a broad sense, including not only the AE that subscribes to a resource from the CSE and specifies the target attribute to be monitored, but also includes each group member contained in the group. For example, the node AE1 in the group member may also subscribe to, from the CSE, a resource to receive a notification message.

After the difference notification message is acquired, the difference notification message may be transmitted to the subscriber, so that the difference notification of message may be achieved.

The embodiments of the present disclosure may be applied to a unified management of electronic tags in a specific area. For example, in terms of subscription notifications, the difference notification method may be adopted to optimize a data package size. For example, for a commodity push scenario in a supermarket, the supermarket has a variety of commodities, and a product newly put on sale is pushed using the subscription notification. In this scenario, it is very suitable to notify using the difference notification. By subscribing to a commodity catalog in a smart retail server by means of difference notification, an information about the newly added commodities may be obtained more intuitively.

In the method of transmitting the message provided by the embodiments of the present disclosure, the target attribute is determined by acquiring the event notification criterion of the subscription resource, the corresponding difference notification message is constructed according to the changed attribute value of the acquired target attribute, and the difference notification message is transmitted to the subscriber corresponding to the target attribute. The embodiments of the present disclosure may be implemented to achieve the difference notification for the target attribute change, so that the subscriber may know the changed attribute value of the attribute in time, and a perception of the subscriber may be improved.

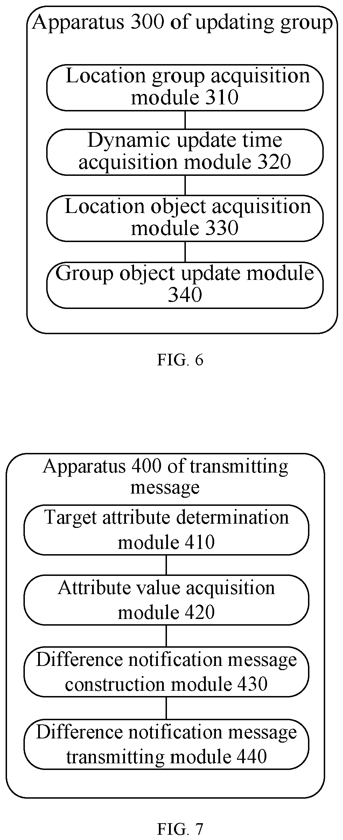

Referring to FIG. 6, a schematic structural diagram of an apparatus of updating a group provided in a third embodiment of the present disclosure is shown. The apparatus 300 of updating the group may specifically include the following modules.

A location group acquisition module 310 is used to acquire a location group for a target area.

A dynamic update time acquisition module 320 is used to acquire a dynamic update time of the location group.

A location object acquisition module 330 is used to acquire, at each time point determined according to the dynamic update time, a target location of a target group object in the location group, and query whether a business object not belonging to the location group exists in the target area.

A group object update module 340 is used to update the target group object in the location group according to the acquired target location and a query result.

In a specific implementation, the group object update module 340 includes an object removing unit used to remove the target group object from the location group when the target location is outside the target area.

In a specific implementation, the group object update module 340 further includes an object adding unit used to add a business object not belonging to the location group into the location group if the business object exists in the target area.

In a specific implementation, the location group acquisition module 310 includes: a request receiving unit used to receive a first group resource creation request, or to receive a second group resource creation request and a group update request; a group attribute acquisition unit used to acquire the group attribute according to the first group resource creation request and the group update request; a location group creation unit used to create a group according to the group attribute, so as to obtain a location group for the target area; an initial group creation unit used to create an initial group according to the second group resource; and an initial group update unit used to update the attribute of the initial group according to the group update request, so as to obtain a location group for the target area.

In a specific implementation, the apparatus 300 of updating the group further includes: an update duration acquisition module used to acquire an update duration of the location group; a dynamic update timing module used to calculate a duration from a time point of obtaining the location group to a current time point, and control the group object update module 340 to stop updating the target group object in the location group when the duration is greater than or equal to the update duration.

In a specific implementation, the apparatus 300 of updating the group further includes: a notification attribute acquisition module used to acquire a dynamic update notification attribute of the location group; and a notification message transmitting module used to transmit a message notification to at least one of the target group object and the business object when it is determined according to the dynamic update notification attribute that a message notification needs to be transmitted to at least one of the target group object and the business object.

In a specific implementation, the notification attribute acquisition module includes: a first notification attribute acquisition unit used to acquire a preset first change notification attribute corresponding to the location group; a first notification message generating unit used to generate a first notification message for the target object and/or generate a second notification message for the business object when it is determined according to the first change notification attribute that a message notification needs to be transmitted; and a second notification attribute acquisition unit used to acquire a preset second change notification attribute corresponding to the location group.

The notification message transmitting module may be used to transmit the first notification message to the target group object; and/or transmit the second notification message to the business object. The notification message transmitting module may also be used to cancel the transmitting of the notification message to the target object and/or the business object when it is determined according to the second change notification attribute that the message notification does not need to be transmitted.

The apparatus of updating the group provided in the embodiments of the present disclosure may be implemented to achieve the dynamic real-time update of the group according to the location of the object in the target area, avoid the problem of group update delay, and reduce the workload and maintenance cost of the group maintenance.

Referring to FIG. 7, a schematic structural diagram of an apparatus of transmitting a message provided in a fourth embodiment of the present disclosure is shown. The apparatus 400 of transmitting a message may specifically include the following modules.

A target attribute determination module 410 is used to acquire an event notification criterion for the subscription resource, and determine, according to the event notification criterion, the target attribute to be monitored.

An attribute value acquisition module 420 is used to acquire a changed attribute value of the target attribute when the attribute value of the target attribute changes.

A difference notification message construction module 430 is used to construct a difference notification message according to the changed attribute value when the notification mode is a difference notification mode.

A difference notification message transmitting module 440 is used to transmit the difference notification message.

In a specific implementation, the apparatus 400 of transmitting the message further includes: a subscription request receiving module used to receive a subscription request transmitted by a subscriber corresponding to the subscription resource; and an operation attribute acquisition module used to create or update the operation attribute of the subscription resource according to the subscription request.

In a specific implementation, the apparatus 400 of transmitting the message further includes: a notification mode determination module used to determine according to the notification content type and the notification mode type whether the notification mode is a difference notification mode.

In a specific implementation, the notification mode determination module includes: a first verification unit used to verify the notification content type; a first difference notification mode determination unit used to determine that the notification mode is a difference notification mode when the notification content type is a difference notification content; a second verification unit used to verify the notification mode type when the notification content type is a non-difference notification content; and a second difference notification mode determination unit used to determine that the notification mode is a difference notification mode when the notification mode type is a difference notification mode.

In a specific implementation, the apparatus 400 of transmitting the message further includes: a conventional notification message construction module used to construct a corresponding conventional notification message according to a changed attribute value when the notification mode type is a conventional notification mode.

In a specific implementation, the difference notification message construction module 430 includes: an incremental message construction unit used to construct a difference notification message corresponding to an addition of an incremental attribute value when the changed attribute value only includes the incremental attribute value, where the difference notification message contains an incremental identification parameter representing the incremental attribute value; a decrement message construction unit used to construct a difference notification message corresponding to a decrease of the decrement attribute value when the changed attribute value only includes the decrement attribute value, where the difference notification message contains a decrement identification parameter representing the decrement attribute value; an incremental/decrement message construction unit used to construct a difference notification message corresponding to the addition of the incremental attribute value and the decrease of the decrement attribute value in a case that the changed attribute value includes both the incremental attribute value and the decrement attribute value, where the difference notification message contains the incremental identification parameter representing the incremental attribute value and the decrement identification parameter representing the decrement attribute value.

The apparatus of transmitting the message provided by the embodiments of the present disclosure may be implemented to achieve the difference notification for the changed attribute value of the target attribute, so that the subscriber may know the changed attribute value of the target attribute in time, and the perception of the subscriber may be improved.

For the sake of simple description, the foregoing method embodiments are all expressed as a series of action combinations. However, those skilled in the art should know that the present disclosure is not limited by the described action order, because some steps may be performed in other orders or simultaneously according to the present disclosure. Those skilled in the art should also know that the embodiments described in the specification are all preferred embodiments, and the actions and modules involved are not necessarily required by the present disclosure.

In addition, the embodiments of the present disclosure further provide an electronic device, including a processor and a memory. A computer program that may be run on the processor is stored on the memory, and the processor may execute the program to implement the above method of updating the group, or implement the above method of transmitting the message.

The embodiments of the present disclosure further provide a computer-readable storage medium storing computer instructions. When executed by a processor of an electronic device, the computer instructions allow the electronic device to implement the above-mentioned method of updating the group or the above-mentioned method of transmitting the message.

The various embodiments in the specification are described in a progressive manner. Each embodiment focuses on the differences from other embodiments, and the same or similar parts between the various embodiments may be referred to each other.

Finally, it should also be noted that the relational terms here, such as first, second, etc., are used only to distinguish one entity or operation from another, and do not necessarily require or imply any such actual relationship or sequence between the entities or operations. Furthermore, the terms "including", "containing" or any other variation thereof are intended to encompass a non-exclusive inclusion such that a process, method, product of apparatus including a series of elements includes not only those elements, but also includes other elements not explicitly listed, or further includes other elements inherent to such a process, method, product or apparatus. Without further limitation, an element defined by a phrase "including a..." does not exclude a presence of additional identical elements in the process, method, product or apparatus that includes the element.

The method of updating the group, the method of transmitting the message, the apparatus of updating the group, the apparatus of transmitting the message, the electronic device and the computer-readable storage medium provided in the present disclosure have been described in detail above. The principles and implementations of the present disclosure are described herein by using specific examples. The descriptions of the above embodiments are only used to help understand the methods and core ideas of the present disclosure. For those skilled in the art, modifications may be made to the specific implementation and application scope according to the idea of the present disclosure. In summary, the content of the specification should not be construed as a limitation to the present disclosure.

## Claims

1. A method of updating a group, comprising:
acquiring a location group for a target area;
acquiring a dynamic update time of the location group;
acquiring, at each time point determined according to the dynamic update time, a target location of a target group object in the location group, and querying whether a business object not belonging to the location group exists in the target area; and
updating the target group object in the location group according to the acquired target location and a query result.

2. The method of claim 1, wherein the updating the target group object in the location group according to the acquired target location and a query result comprises:
removing the target group object from the location group in response to the target location being outside the target area.

3. The method of claim 1 or 2, wherein the updating the target group object in the location group according to the acquired target location and a query result comprises:
adding a business object not belonging to the location group into the location group in response to the business object existing in the target area.

4. The method of any one of claims 1 to 3, wherein the acquiring a location group for a target area comprises:
receiving a first group resource creation request;
acquiring a group attribute according to the first group resource creation request; and
creating a group according to the group attribute, so as to obtain the location group for the target area.

5. The method of any one of claims 1 to 3, wherein the acquiring a location group for a target area comprises:
receiving a second group resource creation request;
creating an initial group according to the second group resource creation request;
receiving a group update request; and
updating an attribute of the initial group according to the group update request, so as to obtain the location group for the target area.

6. The method of claim 4 or 5, wherein the group attribute comprises at least one of a dynamic update time, an update duration, a target area, a location-related attribute, a dynamic update attribute, or a dynamic update notification attribute.

7. The method of any one of claims 4 to 6, further comprising:
acquiring an update duration of the location group;
stopping the updating of the target group object in the location group in response to a duration from a time point of obtaining the location group to a current time point being greater than or equal to the update duration.

8. The method of any one of claims 4 to 6, further comprising:
acquiring a dynamic update notification attribute of the location group; and
transmitting a message notification to at least one of the target group object and the business object in response to determining, according to the dynamic update notification attribute, to transmit the message notification to at least one of the target group object and the business object.

9. A method of transmitting a message, comprising:
acquiring an event notification criterion for a subscription resource, and determining, according to the event notification criterion, a target attribute to be monitored;
acquiring, in response to a change in an attribute value of the target attribute, a changed attribute value of the target attribute;
constructing a difference notification message according to the changed attribute value, in response to a notification mode being a difference notification mode; and
transmitting the difference notification message.

10. The method of claim 9, further comprising: before acquiring the event notification criterion for the subscription resource,
receiving a subscription request transmitted by a subscriber corresponding to the subscription resource; and
creating or updating an operation attribute of the subscription resource according to the subscription request.

11. The method of claim 10, wherein the operation attribute comprises an event notification criterion, a notification content type and a notification mode type, and the notification mode type comprises any one of a difference notification mode and a conventional notification mode.

12. The method of any one of claims 9 to 11, further comprising:
acquiring a notification content type and a notification mode type for the subscription resource; and
determining, according to the notification content type and the notification mode type, whether the notification mode is a difference notification mode.

13. The method of claim 12, wherein the determining, according to the notification content type and the notification mode type, whether the notification mode is a difference notification mode comprises:
verifying the notification content type;
determining that the notification mode is the difference notification mode, in response to the notification content type being a difference notification content;
verifying the notification mode type in response to the notification content type being a non-difference notification content; and
determining that the notification mode is the difference notification mode, in response to the notification mode type being the difference notification mode.

14. The method of claim 13, wherein the determining, according to the notification content type and the notification mode type, whether the notification mode is a difference notification mode further comprises:
constructing a conventional notification message according to the changed attribute value, in response to the notification mode type being a conventional notification mode.

15. The method of claim 9, wherein the constructing a difference notification message according to the changed attribute value comprises:
containing an incremental identification parameter representing an incremental attribute value in the difference notification message, in response to the changed attribute value only comprising the incremental attribute value;
containing a decrement identification parameter representing a decrement attribute value in the difference notification message, in response to the changed attribute value only comprising the decrement attribute value; or
containing the incremental identification parameter representing the incremental attribute value and the decrement identification parameter representing the decrement attribute value in the difference notification message, in response to the changed attribute value comprising the incremental attribute value and the decrement attribute value.

16. The method of claim 9, wherein the difference notification message contains an incremental attribute value, a decrement attribute value, an incremental identification parameter representing the incremental attribute value, and a decrement attribute parameter representing the decrement attribute value.

17. An apparatus of updating a group, comprising:
a location group acquisition module configured to acquire a location group for a target area;
a dynamic update time acquisition module configured to acquire a dynamic update time of the location group;
a location object acquisition module configured to acquire, at each time point determined according to the dynamic update time, a target location of a target group object in the location group, and query whether a business object not belonging to the location group exists in the target area; and
a group object update module configured to update the target group object in the location group according to the acquired target location and a query result.

18. An apparatus of transmitting a message, comprising:
a target attribute determination module configured to acquire an event notification criterion for a subscription resource, and determine, according to the event notification criterion, a target attribute to be monitored;
an attribute value acquisition module configured to acquire, in response to a change in an attribute value of the target attribute, a changed attribute value of the target attribute;
a difference notification message construction module configured to construct a difference notification message according to the changed attribute value, in response to a notification mode being a difference notification mode; and
a difference notification message transmitting module configured to transmit the difference notification message.

19. An electronic device, comprising:
a memory storing a computer program; and
a processor configured to execute the computer program to implement the method of updating the group according to any one of claims 1 to 8, or the method of transmitting the message according to any one of claims 9 to 16.

20. A computer-readable storage medium storing computer instructions that, when executed by a processor of an electronic device, allow the electronic device to perform the method of updating the group according to any one of claims 1 to 8, or the method of transmitting the message according to any one of claims 9 to 16.
